**Europäisches Patentamt**

**European Patent Office**

**Office européen des brevets**

(19)

(11) Numéro de publication : **0 102 434**
**B1**

# (12)   FASCICULE DE BREVET EUROPÉEN

(45) Date de publication du fascicule du brevet :
**30.07.86**

(21) Numéro de dépôt : **82430023.0**

(22) Date de dépôt : **30.08.82**

(51) Int. Cl.⁴ : **G 06 F 11/00**, G 06 F 11/22

(54) **Dispositif pour signaler à l'unité de commande centrale d'un équipement de traitement de données, les erreurs se produisant dans les adaptateurs.**

(43) Date de publication de la demande :
**14.03.84 Bulletin 84/11**

(45) Mention de la délivrance du brevet :
**30.07.86 Bulletin 86/31**

(84) Etats contractants désignés :
**DE FR GB IT**

(56) Documents cités :
**EP-A- 0 010 609**
**FR-A- 2 340 584**
**US-A- 3 873 819**
**US-A- 3 988 714**
**IBM TECHNICAL DISCLOSURE BULLETIN, vol. 9, no. 12, mai 1967, pages 1747-1749, New York, (US), T.A. METZ: "Data operation error handling mechanism"**

(73) Titulaire : **International Business Machines Corpora-tion**
**Old Orchard Road**
**Armonk, N.Y. 10504 (US)**
**DE GB IT**
**Compagnie IBM FRANCE**
**5 Place Vendôme**
**F-75000 Paris 1er (FR)**
**FR**

(72) Inventeur : **Castel, René**
**Route des Valettes Sud Tourrettes-sur-Loup**
**F-06140 Vence (FR)**
Inventeur : **Dalboussiere, Gérard**
**Résidences de l'Escours**
**F-06480 La Colle-sur-Loup (FR)**
Inventeur : **Kulakowski, Michel**
**Les Lucioles 17 avenue des Cigales**
**F-06510 Carros (FR)**

(74) Mandataire : **Lattard, Nicole**
**Compagnie IBM France Département de Propriété Industrielle**
**F-06610 La Gaude (FR)**

EP 0 102 434 B1

# 0 102 434

**Description**

## Domaine Technique

La présente invention concerne un dispositif tel qu'exposé dans le préambule de la revendication 1. Un dispositif semblable est décrit dans le document FR-A-2 340 584. Dans un équipement de traitement de données tel qu'un contrôleur de communications, un tel dispositif signale à l'unité de commande centrale les erreurs se produisant dans les adaptateurs de lignes placés sous contrôle de microprocesseurs.

Les contrôleurs de communications sont des équipements de traitement de données destinés à être incorporés dans une installation de télétraitement de données, de manière à gérer les transmissions sur les différentes lignes qui y sont rattachées. Généralement, la commande principale du réseau de télétraitement est concentrée dans une ou plusieurs unités de traitement centrales CPU contenant un répertoire des règles de traitement des données provenant de/ou destinées à des stations terminales ou terminaux du réseau de télétraitement. L'envoi ou la réception des données par l'intermédiaire des lignes de communications est géré par des contrôleurs de communications placés sous la dépendance de la ou des unités centrales CPU. Outre l'exécution de commandes de transmission, le contrôleur est chargé d'exécuter des fonctions du répertoire notamment des fonctions relevant directement des procédures standard de transmission. De ce fait, les unités de traitement centrales CPU sont libérées des tâches correspondantes et peuvent se consacrer à l'exécution d'autres travaux.

Le contrôleur de communications est un ensemble complexe ayant une intelligence qui est en majorité concentrée dans une ou plusieurs unités de commande centrales CCU. Les unités de commande centrales sont reliées d'une part aux terminaux au travers d'adaptateurs de lignes et d'autre part aux unités de traitement centrales CPU au travers d'adaptateurs de canaux ainsi désignés en raison du fait qu'ils sont connectés aux canaux de la ou des unités de traitement centrales.

Les adaptateurs de lignes peuvent desservir un certain nombre de lignes de communications au moyen d'un dispositif de balayage cyclique comprenant un ensemble de mémoires à accès aléatoire dans lesquelles sont stockés temporairement les données reçues des différentes lignes ou devant être envoyées sur celles-ci sous contrôle du dispositif de balayage. Les adaptateurs de lignes comprennent chacun un microprocesseur qui permet de décharger les unités de commande centrale d'un certain nombre de tâches notamment les tâches de gestion des données échangées entre l'unité de commande centrale CCU et les lignes dans le sens émission ou réception.

Dans un tel environnement il est nécessaire que les conditions d'erreurs détectées dans un adaptateur de lignes soient signalées à l'unité de commande centrale. Diverses solutions peuvent être envisagées pour faire cette opération. Par exemple, on pourrait n'utiliser que le microcode du microprocesseur. Cette solution présente l'inconvénient que, si la condition d'erreur a provoqué une panne dans le microprocesseur, l'intégrité du microcode n'est pas garantie et en conséquence les conditions d'erreurs ne peuvent être signalées par le microcode à l'unité de commande centrale.

Une autre solution consisterait à prévoir deux microprocesseurs par adaptateur de lignes. Il est bien évident que cette solution est coûteuse aussi bien en matériel qu'en logiciel car elle nécessite des moyens pour gérer les échanges entre les deux microprocesseurs.

Une troisième solution consisterait à prévoir un chemin spécial pour la signalisation des erreurs. Cette solution est elle aussi coûteuse car elle nécessite du matériel supplémentaire et le développement de programmes supplémentaires pour prendre en compte ce chemin spécial.

## Exposé de l'Invention

Un objet de la présente invention est de réaliser un dispositif placé dans chaque adaptateur, permettant de signaler à l'unité de traitement centrale les erreurs se produisant dans les adaptateurs de lignes sans faire intervenir le microcode contrôlant les microprocesseurs assurant la gestion des échanges de données entre les lignes connectées aux adaptateurs et l'unité de commande centrale, lorsque les erreurs ont affecté l'intégrité du microcode.

## Résumé de l'Invention

Conformément à l'invention dans un équipement de traitement de données tel qu'un contrôleur de communications gérant des lignes par l'intermédiaire d'adaptateurs comportant un microprocesseur ayant un registre interne d'erreur et fonctionnant sous contrôle d'un microcode de commande, et des circuits de détection d'erreur, chaque adaptateur est muni d'un dispositif pour signaler les erreurs se produisant dans l'adaptateur à l'unité de traitement centrale. Ce dispositif comporte des moyens pour stocker les conditions d'erreur détectées par les circuits de détection. Des moyens de classification reçoivent les conditions d'erreurs et fournissent deux indications : la première indiquant qu'au moins une condition d'erreur affectant l'intégrité du microcode de commande s'est produite et la seconde indiquant

2

qu'au moins une condition d'erreur n'affectant pas l'intégrité du microcode s'est produite. Des moyens de génération d'un signal d'arrêt suite à erreur sont sensibles à la première indication pour commander l'arrêt du fonctionnement du microprocesseur sous contrôle de son microcode. Lorsque le signal d'arrêt suite à erreur est actif, des premiers moyens de transfert provoquent l'envoi des conditions d'erreurs à l'unité de commande centrale et des seconds moyens de transfert provoquent l'envoi à l'unité de commande centrale du contenu du registre d'erreur interne du microprocesseur.

### Brève Description des Figures

La figure 1 représente schématiquement un contrôleur de communications dans lequel peut être utilisé le dispositif de report d'erreur conforme à la présente invention.

La figure 2 représente un adaptateur incorporant le dispositif de signalisation d'erreur.

La figure 3 représente les circuits de l'interface 220 pour le transfert des données entre l'unité de commande centrale et les adaptateurs.

La figure 4 représente le circuit de signalisation d'erreur 224.

La figure 5 représente la bascule permettant de placer la demande d'interruption de niveau 1 sur le bus I/O.

La figure 6 représente les bascules de décodage d'opérations « OBTENIR ETAT ERREUR » et « RESTAURATION PROGRAMMEE ».

La figure 7 représente les circuits de transfert de conditions d'erreurs du bus I/O.

La figure 8 représente les circuits de transfert du registre interne d'erreurs au bus I/O.

### Description Détaillée

Avant de faire la description de la présente invention, on va décrire à titre d'exemple un contrôleur de communications dans lequel elle peut être mise en œuvre.

Le contrôleur de communications contrôle l'échange de données entre les terminaux connectés aux lignes de communications et un système de traitement central CPU qui peut être un ordinateur du type IBM 370.

Dans un échange de données dans le sens terminaux vers système central CPU, le contrôleur a pour fonction de balayer les lignes de communications, de multiplexer les données arrivant sur ces lignes et de transmettre le train de données ainsi obtenu au système central par un canal grande vitesse.

Dans un échange dans le sens système central vers terminaux, le contrôleur reçoit les données multiplexées à transmettre à partir du système central sur le canal à grande vitesse, les démultiplexe et les achemine aux terminaux destinataires désignés par adressage.

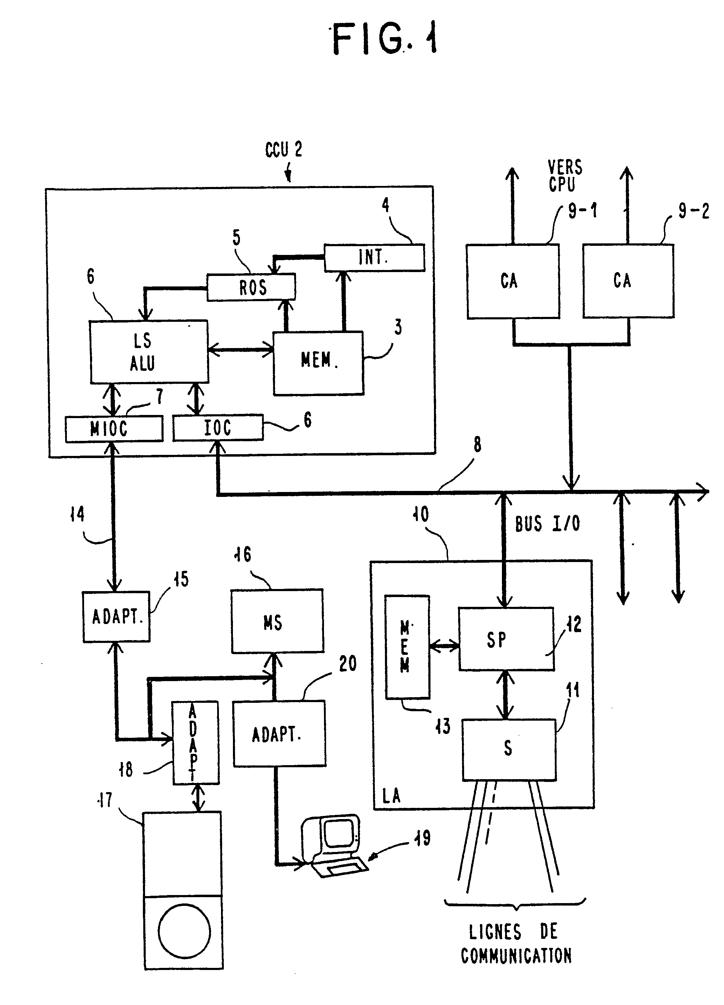

Comme on peut le voir sur la figure 1, le contrôleur comprend une unité de commande centrale CCU 2 qui est du même type que celle utilisée dans le contrôleur de communication IBM 3705. Cette unité est un processeur qui fonctionne sous commande d'un programme de contrôle de réseau à plusieurs niveaux d'interruption. Le programme est emmagasiné dans la mémoire 3. Chaque événement lorsqu'il se produit crée une interruption par l'intermédiaire d'un mécanisme d'interruption 4, à un niveau donné du programme qui fait que le code de traitement de l'événement se déroule. La mémoire morte ROS 5, contient les mots de commande nécessaires pour commander les différentes opérations à réaliser suite au décodage des instructions du programme. Le décodage du code opération des différentes instructions provoque l'adressage d'un ou plusieurs mots de commande dans la mémoire 5 qui contrôlent le fonctionnement des différents composants de l'unité 2. Les opérations à réaliser sont traitées par l'ensemble 6 comportant une unité logique et arithmétique ALU et une mémoire locale LS. Dans la mémoire locale sont définis à des positions d'adresse données, des registres généraux utilisés par le programme de contrôle pour l'exécution des instructions et le traitement des données. Ces registres sont répartis en groupes, chaque groupe étant affecté à un niveau de programme. Ceci permet au programme à un niveau d'être interrompu à un autre niveau sans qu'il soit nécessaire de sauver le contenu des registres.

Elle comporte de plus des registres externes qui sont utilisés pour emmagasiner des informations nécessaires pour la communication entre le programme de contrôle et les circuits de l'unité logique et arithmétique ou autres circuits dans l'unité de commande 2. Par une instruction d'entrée, le programme peut provoquer le chargement du contenu d'un registre externe dans un registre générale et par une instruction de sortie, le contenu d'un registre général peut être chargé dans un registre externe.

L'unité de commande 2 communique avec les différentes parties du contrôleur par l'intermédiaire de deux interfaces IOC et MIOC 6 et 7.

A l'interface IOC 6 est attaché un bus d'entrée/sortie 8. Le système de traitement centrale CPU est connecté à ce bus par un ou plusieurs adaptateurs de canaux CA, deux adaptateurs 9-1 et 9-2 sont schématisés sur la figure 1.

Des adaptateurs de lignes sont connectés en parallèle au bus d'entrée 8. Un de ces dispositifs 10 est schématisé sur la figure. Chaque adaptateur de lignes assure le balayage d'une partie des lignes de communications à gérer par le contrôleur. En conséquence, le nombre des adaptateurs varie suivant la configuration du réseau.

Chaque adaptateur de lignes comprend un dispositif de balayage proprement dit, S 11 comportant des mémoires qui sous contrôle d'un dispositif d'adressage stockent les données reçues des lignes ou à transmettre sur les lignes. A chaque ligne correspond une zone de positions mémoire. Il comprend aussi un microprocesseur microprogrammé SP 12, et une mémoire associée 13. Ce microprocesseur permet de décharger l'unité de commande centrale de certaines fonctions, fonctions qui concernent notamment le traitement des données sur les lignes connectées à l'adaptateur de lignes associé.

L'autre interface MIOC 7 est connectée à un bus d'entrée/sortie 14, à ce bus est attaché par un adaptateur 15 un système de maintenance et de service MS 16 qui est aussi un microprocesseur avec un microcode de commande. Il est connecté à une unité à disque 17 par un adaptateur 18 et à une console 19 comportant un écran d'affichage et un clavier, par l'intermédiaire d'un adaptateur 20. La console est un terminal qui peut être du type 3101.

Ce système de maintenance et de service a trois fonctions. Il permet à l'opérateur de surveiller le contrôleur, en contrôlant et analysant les actions effectuées et de faciliter le dépannage en permettant l'isolement et la réparation des erreurs de programmation et des pannes, à la fois dans le contrôleur et dans le système de maintenance lui-même. De plus, il est utilisé pour exécuter des services notamment le chargement des programmes à partir de l'unité à disques et la lecture et l'écriture de registres, etc. Pour ce faire, le programme de commande du réseau dans l'unité CCU 2 comporte des procédures de récupération après erreur qui permettent au contrôleur de ne pas être affecté par les erreurs physiques ou les erreurs de transmission intermittentes. Ces procédures sont exécutées automatiquement l'orsqu'une erreur de transmission se produit. Si elles ne permettent pas au contrôleur de se rétablir le programme reporte une condition d'erreur. Le système de maintenance rassemble les enregistrements des erreurs se produisant dans le contrôleur et les transmet au système central sous forme de messages d'alerte.

De plus des routines de diagnostic sont à la disposition du personnel de maintenance pour trouver les pannes. Les routines résident dans le fichier de l'unité à disque et peuvent en conséquence être appelées même si le système central, le canal ou le contrôleur est en panne.

L'unité de commande communique avec les adaptateurs de lignes ou de canaux en utilisant deux types d'opérations. Les opérations du premier type PIO, sont des opérations initialisées par programme, déclenchées par l'un ou l'autre de deux instructions spéciales IOH ou IOH I qui sont deux instructions qui ont été ajoutées au jeu d'instructions du contrôleur IBM 3705. Ces instructions seront décrites par la suite. Les opérations du second type AIO, sont des opérations initialisées par l'adaptateur et correspondent à un transfert d'informations en vol de cycle.

La première des instructions IOH est une instruction d'entrée/sortie adaptateurs du type RR (registre à registre) de format suivant :

| 0 | R2 | 0 | R1 | X"50" |
|---|----|---|----|-------|
| 0 | 1 | 3 | 5 | 7     15 |

Cette instruction provoque le transfert du contenu du registre de l'unité de commande centrale déterminé par le champ R1 à un adaptateur canal ou ligne déterminé par le contenu du champ R2 ou vice versa.

La seconde instruction IOH I est une instruction d'entrée/sortie valeur immédiate IOH du type RA, de format suivant :

| 0000 | R1 | X"70" | |
|------|----|-------|---|
| 0    4 | 5    7 | 8           15 | 16         31 |

Cette instruction transfère le contenu du registre déterminé par R1 à un adaptateur ou vice versa. Le registre de l'adaptateur externe est déterminé par le contenu du second demi-mot de l'instruction (adresse immédiate).

Dans un tel environnement, lorsqu'une condition d'erreur se produit dans un adaptateur de lignes, et que cette condition d'erreur ne provoque pas de panne dans le microprocesseur, la condition d'erreur peut être reportée à l'unité de commande centrale par les chemins normaux du microprocesseur et les connexions bus et interface entre l'adaptateur de lignes et l'unité de commande.

Dans le cas où se produit une condition d'erreur qui provoque une panne du microprocesseur et qui en conséquence affecte l'intégrité du microcode, la condition ne peut plus être reportée par les chemins normaux.

Conformément à la présente invention, un dispositif est ajouté dans chaque adaptateur de lignes pour permettre de signaler ces types de conditions d'erreurs.

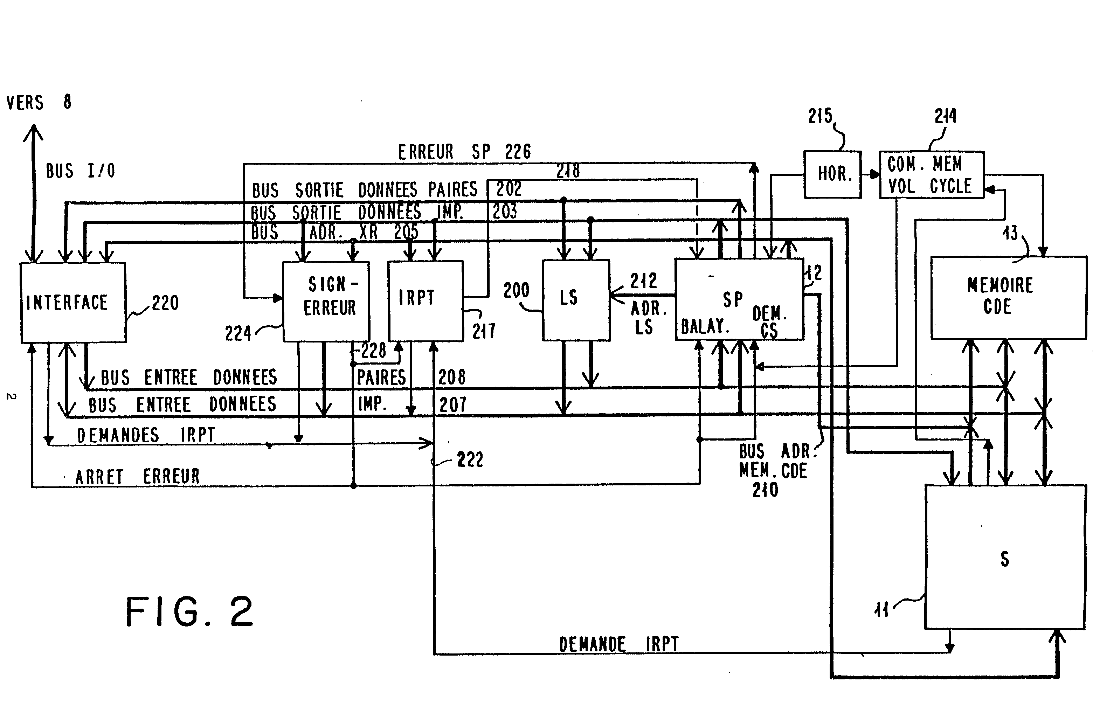

Sur la figure 2, est représenté le schéma d'un adaptateur de lignes LA, 10. Il comprend un microprocesseur SP 12 qui dans un mode de réalisation préféré est du même type que celui utilisé dans l'unité de commande IBM 3880. Un schéma en est donné dans l'article « A High Performance

Microprocessor » par J. I. Norris, paru dans la revue IBM Disk Storage Technology, en février 1980.

Il fonctionne sous commande d'un microprogramme emmagasiné dans la mémoire de commande 13. Deux espaces de registres sont directement adressables par les micro-instructions, ce sont les registres de la mémoire locale 200 au nombre de 64 et les registres externes XR par lesquels le microprocesseur peut communiquer avec l'extérieur.

Les bus de données 202 et 203 constituent les chemins de sortie vers la mémoire locale 200 et les registres externes. Le bus SORTIE DONNEES PAIRES 202 constitue le chemin des données vers les registres de la mémoire locale d'adresses paires et le bus SORTIE DONNEES IMPAIRES 203 constitue le chemin des données vers les registres de la mémoire locale d'adresses impaires et les registres externes dans les éléments extérieurs au microprocesseur.

Les registres externes sont adressés par le bus 205 qui permet aussi d'adresser des registres du dispositif de balayage S, 11, considérés comme registres externes.

Les bus d'entrée 207 et 208 constituent les chemins d'entrée au microprocesseur à partir de la mémoire locale, des registres externes et des bus entrée/sortie de la mémoire de commande. Le bus 207 ENTREE DONNEES IMPAIRES constitue le chemin des données pour les registres de la mémoire locale d'adresses impaires les bits 8 à 15 des données et instructions de la mémoire de commande, et les registres externes et le bus 208 ENTREE DONNEES PAIRES constitue le chemin de données pour les registres de la mémoire locale d'adresses paires, et les bits 0 à 7 des données et instructions de la mémoire de commande. La mémoire de commande est adressée par le microprocesseur par le bus 210 et la mémoire locale par le bus 212.

Le dispositif de balayage S et la mémoire de commande pouvant échanger des données en vol de cycle, de même que la mémoire de commande et l'unité de commande centrale CCU un circuit logique de commande 214 placé sous contrôle de l'horloge 215, assure les fonctions de commande de la mémoire 13 et la gestion du protocole des échanges en vol de cycle en utilisant la facilité offerte par la ligne d'entrée de demande de vol de cycle DEM.CS du microprocesseur.

Le mécanisme d'interruption 217 assure les fonctions de détermination de priorités et de masquage des interruptions commandées par programme ou par le matériel du microprocesseur. La demande d'interruption est appliquée au microprocesseur par la ligne 218. Les demandes d'interruption IRPT émanant du dispositif de balayage S, de l'unité de commande centrale par le circuit d'interface 220 sont appliquées au circuit d'interruption 217, par le bus 222.

Le circuit d'interface 220 assure la communication entre l'adaptateur de lignes et le bus 8 par lequel l'adaptateur est connecté à l'unité de commande CCU.

Le circuit 224 conforme à l'invention comprend des moyens pour détecter les différentes conditions d'erreurs qui peuvent se produire dans l'adaptateur. Il reçoit la ligne ERREUR SP 226, qui indique qu'il s'est produit une erreur dans le microprocesseur, et les bits sur les bus 203 et 205. Il fournit une indication sur sa ligne de sortie 228 ARRET ERREUR, qui est connectée à l'interface 220, au microprocesseur SP, et au mécanisme d'interruption 217. Les erreurs sont classées en deux catégories, celles qui peuvent être traitées par le microcode et celles qui provoquent un arrêt.

Pendant le fonctionnement normal, l'interface 220 en association avec les routines du microcode assure la communication entre l'adaptateur et l'unité CCU pour échanger les informations et pour reporter les conditions d'erreurs traitées par le microcode. Lorsqu'une erreur qui affecte l'intégrité du microcode dite arrêt erreur se produit, la logique 224 et l'interface 220 peuvent la reporter à l'unité de commande sans l'assistance du microprocesseur.

L'adaptateur contient des circuits de vérification qui peuvent détecter diverses conditions d'erreurs. Ces conditions sont stockées dans un registre externe d'adresse donnée par exemple XR 03. Ce registre peut être accédé en mode lecture/écriture par le microprocesseur. Les bits de ce registre sont mis à 1 à la détection d'une erreur, avec la configuration suivante :

bit 0 : accusé réception inattendu
bit 1 : erreur détectée lors de l'écriture de données dans la mémoire de commande
bit 2 : erreur détectée dans le microprocesseur (ligne 226)
bit 3 : erreur détectée adresse registre externe
bit 4 : erreur détectée adresse mémoire commande
bit 5 : erreur détectée adresse mémoire locale
bit 6 : erreur détectée interface adaptateur
bit 7 : erreur détectée sur le bus I/O

Les bits 0 à 5 correspondent à des conditions d'erreurs qui affectent le microprocesseur et mettent le système en mode arrêt suite à erreur et les bits 6 et 7 correspondent à des conditions qui peuvent être traitées par le microcode.

Le bit 0 est mis à 1 si, lorsque le microcode effectue une opération de lecture ou écriture à un registre externe situé à l'extérieur de la gamme des adresses de registre externes réservés pour le dispositif de balayage connecté au microprocesseur, un signal d'accusé de réception est reçu par le microprocesseur en provenance du dispositif de balayage. La gamme d'adresses affectées est dans un mode de réalisation OD à 17 en hexadécimal.

5

Le bit 1 est mis à 1 lorsqu'une erreur de parité est détectée sur les bus 207 et 208 pendant une opération d'écriture de la mémoire.

Le bit 2 est mis à 1 chaque fois que la ligne 226 ERREUR SP devient active. Les circuits de vérification correspondant à cette condition sont contenus dans le microprocesseur lui-même. Lorsqu'une des conditions suivante est détectée : erreur sur les données de la mémoire de commande, erreur sur les données des registres externes et de la mémoire locale, erreur interne, le microprocesseur stocke les conditions d'erreurs correspondantes de façon interne dans un registre et active la ligne 226. Ces conditions peuvent être extraites du microprocesseur en activant la ligne BALAYAGE. Dans ce cas le microprocesseur place la condition d'erreur sur les bits 0, 1, 2 du bus de sortie données paires 202.

Le bit 3 est mis à 1 lorsqu'une erreur de parité est détectée sur le bus d'adresse de registre externe 205 qui comporte les bits d'adresse et un signal de sélection de registre externe, pendant une opération de lecture ou d'écriture.

Le bit 4 est mis à 1 lorsqu'une erreur de parité est détectée sur le bus d'adresse de la mémoire de commande 210 pendant une opération de lecture ou d'écriture.

Le bit 5 est mis à 1 lorsqu'une erreur de parité est détectée sur le bus d'adresse 212 de la mémoire locale et sur le bus d'entrée et de sortie paires et impaires de la mémoire locale.

Le bit 6 est mis à 1 lorsque pendant une opération de lecture ou d'écriture d'un registre externe dans la gamme d'adresses affectées au dispositif de balayage, le signal d'accusé de réception n'est pas reçu.

Le bit 7 est mis à 1 lorsque pendant une opération d'entrée/sortie une erreur de parité est détectée sur les fils du bus I/O affectés aux données pendant un transfert des données ou si une combinaison invalide des étiquettes de contrôle sur le bus I/O est détectée.

Dans le cas de conditions d'erreurs traitées par le microcode (signalées par les bits 6 et 7), l'intégrité du microcode n'est pas affectée et par des procédures de récupération après erreur le microcode reporte ces erreurs à l'unité de commande centrale. Ces procédures seront décrites ultérieurement.

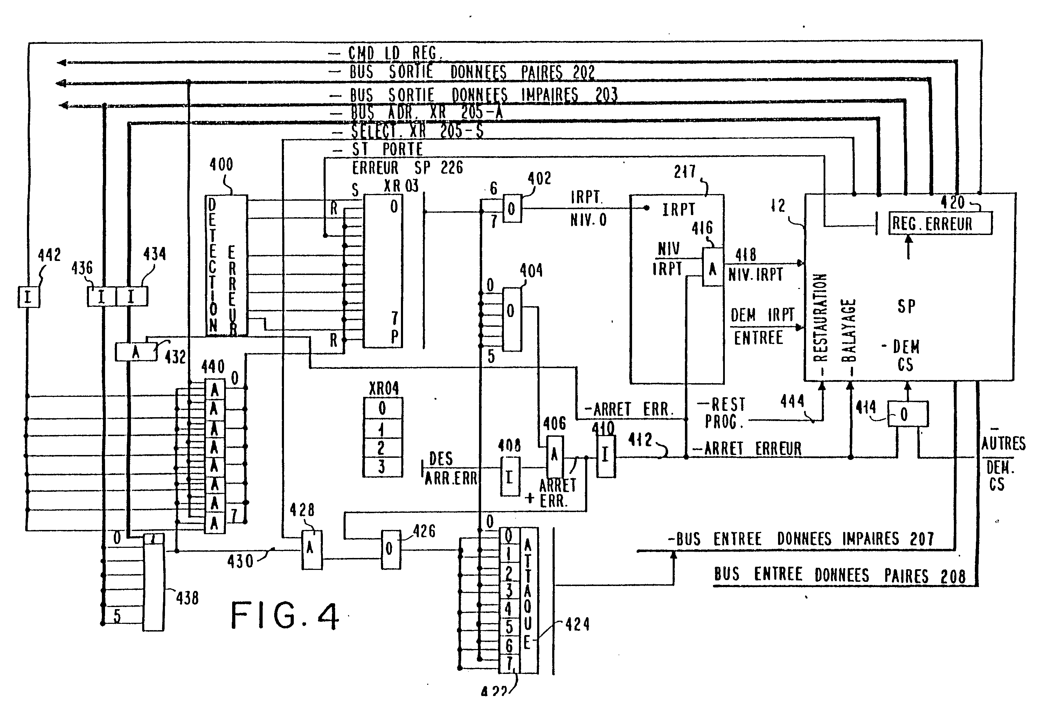

Les autres erreurs, signalées par les bits 0 à 5 affectant l'intégrité du microcode sont reportées à l'unité de commande centrale sans intervention du microprocesseur, conformément à l'invention, par le circuit 224 qui sera décrit en référence à la figure 4.

Avant de passer à la description de ce circuit on va décrire les protocoles d'échanges entre l'adaptateur et l'unité de commande centrale.

Le bus I/O comporte les lignes suivantes :

| LIGNES DU BUS I/O | | SENS | |
|---|---|---|---|
| | | CCU | ADAPTATEUR |
| Entrée/sortie | I/O | ---→ | |
| Etiquette adresse | TA | ---→ | |
| Etiquette donnée | TD | ---→ | |
| Sortie/Lecture/Ecriture | R/W | ---→ | |
| Arrêt | HALT | ---→ | |
| Restauration | RES | ---→ | |
| Vol de Cycle Accepté | CSG | ---→ | |
| Demande de vol de cycle | CSR | ←--- | |
| Multiplet valide | VB | ←--- | |
| Demi-mot valide | VH | ←--- | |
| Parité valide | PV | ←--- | |
| Demande d'interruption supprimée | IRRR | ←--- | |
| Fin de chaîne | EOC | ←--- | |
| Modification | M | ←--- | |
| Multiplet de données 0 (8 bits+parité) | BO | ←--→ | |
| Multiplet de données 1 (8 bits+parité) | B1 | ←--→ | |

Le bus peut supporter les deux types d'opérations d'entrée/sortie initialisé par programmes (PIO) à savoir une opération PIO d'écriture et une opération PIO de lecture.

L'opération PIO d'écriture consiste à transmettre des informations de l'unité de commande CCU vers l'adaptateur. L'opération PIO de lecture permet de transmettre des informations de l'adaptateur vers l'unité de commande CCU.

Pour une opération PIO d'écriture, l'unité de commande active l'étiquette IO. Les adaptateurs installés sur le bus retirent les interruptions postées sur le bus (étiquette IRR). L'unité de commande prépare sur les lignes de données du bus 8 l'adresse de l'adaptateur et la commande à exécuter puis active l'étiquette TA. Le format est le suivant :

```
    MULTIPLET 0: B0                    MULTIPLET 1: B1

    0  1  2  3  4  5  6  7    P    0  1  2  3  4  5  6  7    P
   _____!_0_!____!
   !_____!_____!_!_____!_____!___!____!
         ----      ------           COMMANDE            ↑
          ↓          ↓                                  PIO
        → ADRESSE ←                                   ECRITURE
```

L'adaptateur reconnaissant son adresse et le type de commande, bit 7 de B1, est sélectionné et renvoie en accusé de réception l'étiquette VH.

L'unité de commande désactive l'étiquette TA.

L'adaptateur désactive VH.

L'unité de commande prépare sur les lignes de données du bus, les informations à transférer et active TD.

L'adaptateur sélecté traite les informations et active l'étiquette VH.

L'unité de commande désactive l'étiquette IO. L'opération est terminée, les adaptateurs peuvent à nouveau poster leurs demandes d'interruption sur le bus.

Pour une opération PIO d'écriture, la séquence des étiquettes est identique à celle décrite précédemment.

L'unité de commande active I/O.

Les adaptateurs retirent les interruptions.

L'unité de commande prépare l'adresse et la commande sur les lignes de données du bus 8 et active TA.

L'adaptateur reconnaît son adresse et détecte qu'il s'agit d'une opération PIO de lecture, bit 7, multiplet B1 à 1, et il renvoie VH.

L'unité de commande désactive TA.

L'adaptateur désactive VH.

L'unité de commande active TD.

L'adaptateur place sur le bus I/O lignes données les informations préparées dans ses registres et active le signal VH spécifiant à l'unité de commande que ses données sont valides.

L'unité de commande désactive TD.

L'adaptateur désactive VH.

L'unité de commande désactive I/O.

Les adaptateurs peuvent à nouveau placer les demandes d'interruptions sur le bus.

L'adaptateur peut interrompre l'unité de commande.

Il placera sur les lignes données du bus I/O, le bit correspondant à une interruption, un registre externe d'adresse 5 : XR 05 est réservé au stockage des demandes d'interruption : bit 0 de XR 05 interruption de niveau 1, bit 1 interruption de niveau 2.

L'unité de commande transmettra à l'adaptateur une opération PIO de lecture pour obtenir des informations supplémentaires relatives à l'interruption. Ces informations seront transmises au moment de l'activation de l'étiquette TD par l'unité de commande.

Les demandes d'interruption seront prises en compte par l'unité de commande au moment où l'étiquette IO est inactive.

Les adaptateurs devront retirer ces informations dès que l'étiquette IO devient inactive.

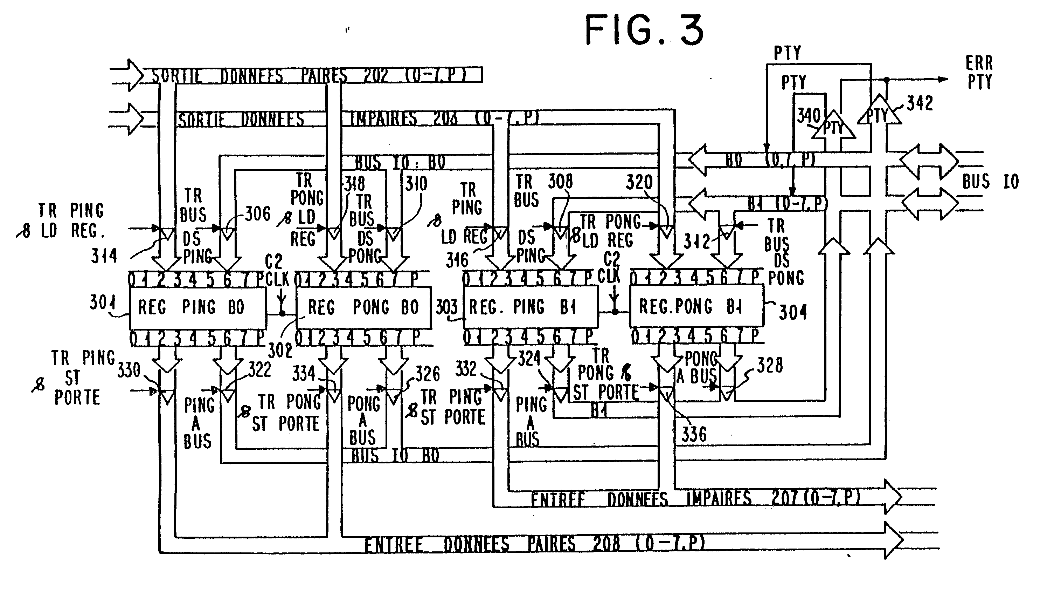

Les circuits de transfert de l'interface 220 sont représentés sur la figure 3.

Dans l'interface, deux registres permettent de transférer des données de longueurs deux demi-mots du microprocesseur vers le bus IO ou inversement du bus IO vers le microprocesseur.

Ces registres, PING et PONG sont considérés par le microprocesseur comme deux registres d'une page de la mémoire locale LS 200.

Ils fonctionnent en mode flip-flop. Les registres PING et PONG 301 et 302 réservés au multiplet 0 sont reliés aux lignes B0 du bus IO d'une part et au bus SORTIE DONNEES PAIRES 202 du microprocesseur et ENTREE DONNEES PAIRES 208. Les registres PING et PONG 303 et 304 sont reliés au bus IO multiplet B1 et au bus du microprocesseur SORTIE DONNEES IMPAIRES 203 et ENTREE DONNEES IMPAIRES 207.

Des portes représentées par des triangles sont placées sur les bus d'entrée et de sortie des registres 301 à 304 pour transférer sous condition, les contenus des bus vers les registres : porte d'entrée et les contenus des registres vers le bus : portes de sortie.

7

Les portes 306 et 308 sont ouvertes par un signal de commande de transfert du bus IO dans les registres PING 301 et 303 respectivement ; TR BUS DS PING.

Les portes 310 et 312 sont ouvertes par un signal de commande de transfert du bus IO dans les registres PONG 302 et 304 respectivement : TR BUS DS PONG.

Les portes 314, 316 sont ouvertes par un signal de commande de transfert dans les registres PING 301 et 303 TR PING et de chargement de registre LD REG. Les portes 318 et 320 sont ouvertes par un signal de commande de transfert dans les registres PONG 302 et 304 TR PONG et de chargement de registre LD REG. Les signaux TR PING et TR PONG sont activés par la logique du microprocesseur dès que celui-ci accède aux pages correspondantes de la mémoire locale 200. Les signaux LD REG permettent d'écrire dans les registres.

Les portes de sortie 322 et 324 sont ouvertes par un signal de commande PING à BUS pour permettre le transfert des contenus de registres PING 301 et 303 au bus IO. De même, les portes 326 et 328 sont ouvertes par un signal de commande PONG à BUS pour permettre le transfert des contenus des registres au bus IO.

Les portes de sortie 330 et 332 sont ouvertes par les signaux de commande de transfert des registres PING et d'ouverture de porte, TR PING et ST PORTE pour envoyer le contenu des registres 301 et 303 au bus d'entrée de données paires 208 et au bus d'entrée de données impaires 207 respectivement.

Les portes de sortie 334 et 336 sont ouvertes par les signaux de commande de transfert de registres PONG et d'ouverture de porte : TR PONG et ST PORTE pour envoyer le contenu des registres 302 et 304 au bus d'entrée de données paires 208 et au bus d'entrée de données impaires 207 respectivement.

Les signaux TR PING et TR PONG sont activés par le microprocesseur dès que l'on accède aux pages correspondantes de la mémoire locale 200. Les signaux LD REG et ST PORTE permettent au microprocesseur d'écrire ou de lire les registres PING et PONG. La logique de contrôle du microprocesseur activera TR BUS DS PING ou TR BUS DS PONG pour l'écriture du contenu du bus IO dans les registres PING et PONG et activera PING à BUS ou PONG à BUS pour la lecture des registres PING et PONG et le transfert de leur contenu vers le bus IO conformément au protocole d'échange des informations sur bus IO. Dans le cas d'une opération d'écriture, le microprocesseur n'intervient que pour lire le contenu des registres PING et PONG et dans le cas d'une opération de lecture il n'intervient que pour lire le contenu du registre PING et pour charger le registre PONG avec les données correspondantes à l'opération en cours.

Deux circuits de vérification de parité 340 et 342 sont prévus pour contrôler la parité des bits de données des multiplets B0 et B1 du bus IO. Ils fournissent l'indication d'erreur de parité ERR PTY et génère sur le bus IO les bits de parité PTY des multiplets B0 et B1 dans le cas où lesdits multiplets ne comportent pas l'indication de parité, notamment lorsque le contenu d'un registre externe est placé sur le bus.

L'interface comprend de plus des circuits logiques non représentés pour générer les différentes étiquettes de commande conformément au protocole de communication entre l'unité centrale CCU et les adaptateurs.

Le dispositif de signalisation d'erreur permettant de mettre en œuvre la présente invention est représenté sur la figure 4. Les signaux + et — indiquent à quels niveaux hauts (+) ou bas (—) les signaux sur les lignes sont actifs.

Les erreurs sont stockées dans le registre externe d'adresse XR 03 situé dans ce circuit. Les bits de ce registre sont mis à 1 par les différents dispositifs de détection d'erreur schématisés par le bloc 400 situés dans l'adaptateur de lignes.

Les sorties indicatrices d'erreurs sont appliquées aux entrées d'enclenchement S du registre XR 03. Le bit 2 est mis à 1 par le ligne 226, lorsqu'une erreur interne se produit dans le microprocesseur, c'est-à-dire lorsqu'un des bits du registre d'erreur interne 420 est à 1.

Des moyens de classification sont prévus pour classer les conditions d'erreurs en deux catégories. Ces moyens comprennent deux circuits OU 402 et 404 qui reçoivent les contenus du registre XR 03. Le circuit OU 402 reçoit les bits 6 et 7 du registre XR 03 et fournit en sortie un signal indiquant qu'une erreur pouvant être traitée par le microcode s'est produite, signal qui est utilisé comme demande d'interruption de niveau 0 (le plus prioritaire) appliquée au circuit 217. Le circuit OU 404 ne reçoit que les bits 0 à 5 du registre XR 03 et fournit un signal au niveau haut indiquant une erreur qui ne peut être traitée par le microcode, s'est produite. Ce signal est appliqué à un circuit ET 406.

Un registre externe XR 04 pouvant être chargé par le microprocesseur contient des bits de commande et d'état. La position 3 du registre XR 04 est une bascule de commande permettant de désactiver le signal d'arrêt suite à erreur, qui fournit un signal de commande « DES ARR ERR ». Ce signal est appliqué à un inverseur 408. En l'absence de ce signal de commande, le circuit ET 406 fournit le signal + ARRET ERREUR lorsqu'un des bits 0 à 5 est à un. Le signal + ARRET ERREUR est inversé par l'inverseur 410 pour obtenir sur la ligne de sortie 412 le signal — ARRET ERREUR.

Lorsque cette ligne 412 est activée, le microprocesseur, est placé dans le mode « Demande de vol de cycle », la ligne 412 étant appliquée à l'entrée — DEM CS du microprocesseur par la porte OU 414 qui reçoit sur son autre entrée, les demandes de vol de cycle normales en provenance du dispositif de balayage S.

Le microprocesseur reste dans ce mode jusqu'à ce que la condition d'arrêt suite à erreur disparaisse.

Dans ce mode, le traitement sous contrôle du microcode est arrêté mais les horloges continuent à marcher.

Le signal — ARRET ERREUR en 412 est aussi appliqué à l'entrée balayage du microprocesseur, et à l'entrée d'un circuit ET 416 dans la logique de traitement des interruptions. Le circuit ET reçoit aussi les indications de niveaux d'interruption NIV IRPT codées sur trois bits puisque le microprocesseur a 8 niveaux d'interruption.

Quant le signal — ARRET ERREUR est actif (niveau bas) le circuit ET 416 est fermé et les lignes d'entrée 418 indiquant au microprocesseur le niveau d'interruption sélectionné par la logique 217 ne sont pas actives.

Il résulte des deux conditions entrée — BALAYAGE active et entrée 418 inactive que le contenu du registre d'erreur 420 interne au microprocesseur est placé sur le BUS de sortie DONNEES IMPAIRES 203 avec la configuration suivante :

Bit 0 : erreur données mémoire commande 13
BiT 1 : erreur données registre externe/registre mémoire locale
Bit 2 : erreur interne

Le contenu du registre XR 03 est placé sur le bus d'entrée DONNEES IMPAIRES 207 par l'ensemble logique comprenant les circuits ET 422-0 à 422-7 et des circuits d'attaque 424.

Chacun des circuits ET reçoit un des bits du registre XR 03 et un signal de conditionnement, généré par le circuit OU 426 et le circuit ET 428.

Le circuit OU 426 reçoit le signal + ARRET ERREUR et la sortie du circuit ET 428. Le circuit ET 428 reçoit le signal de commande — ST PORTE et la sortie de décodage d'adresse 430 de registre externe.

Quand une condition d'erreur se produit, il peut y avoir n'importe quelle adresse de registre externe sur le bus d'adresse 205. Dans le mode de demande de vol de cycle qui est activé par le signal — ARRET ERREUR, le bus d'adressage des registres externes et la ligne — ST PORTE reste à l'état qu'ils avaient avant l'erreur. Pour empêcher que le contenu d'un registre autre que le registre XR 03 soit placé sur le bus lorsqu'une condition d'arrêt suite à erreur se produit, la ligne SELECT XR 205-S qui fait partie du bus 205 d'adressage des registres, les autres lignes BUS ADR XR 205-A étant réservées aux bits d'adresse proprement dits, est désactivée par l'intermédiaire de la porte ET 432. Une entrée du circuit ET 432 reçoit le signal — ARRET ERREUR, ce qui fait que ce circuit est fermé lorsque la condition d'arrêt suite à erreur a été détectée et son autre entrée reçoit le signal — SELECT XR 205-S inversé par l'inverseur 434.

La sortie du circuit ET 432 est amenée au décodeur d'adresse 438 qui reçoit en outre les bits d'adresse du bus 205, inversé par des inverseurs 436.

Dans le cas où le circuit ET 432 est fermé le bit de sélection est à 0 et le circuit de décodage fournit un signal de sortie au niveau bas.

Le registre XR 03 est restauré à la mise sous tension du contrôleur ou à n'importe quel moment sous contrôle de l'unité de commande, ou par un signal de restauration fourni par l'ensemble de circuit ET 440.

Chacun des circuits ET de l'ensemble 440 : 440-0, 440-7, reçoit une des lignes du bus — SORTIE DONNEES IMPAIRES 203, la ligne de sortie 430 du circuit de décodage d'adresse, et la ligne de commande de chargement registre — CMD LD REG, par l'intermédiaire d'un inverseur 442.

En conséquence, en l'absence de commande de restauration générale les bascules du registre XR 03 sont restaurées lorsqu'un des bits sur les bus 203 est inactif, et que la ligne de décodage d'adresse de XR 03 est active et que la commande — CMD LD REG est active (au niveau bas).

Le contenu du registre XR 03 est placé sur le bus ENTREE DONNEES IMPAIRES 207 lorsque la ligne de sortie 430 de décodage d'adresse du registre XR 03 est active et que la commande ST PORTE est inactive (niveau haut) ou que la ligne + ARRET ERREUR devient active.

On va maintenant donner la procédure de signalisation d'erreur à l'unité de commande.

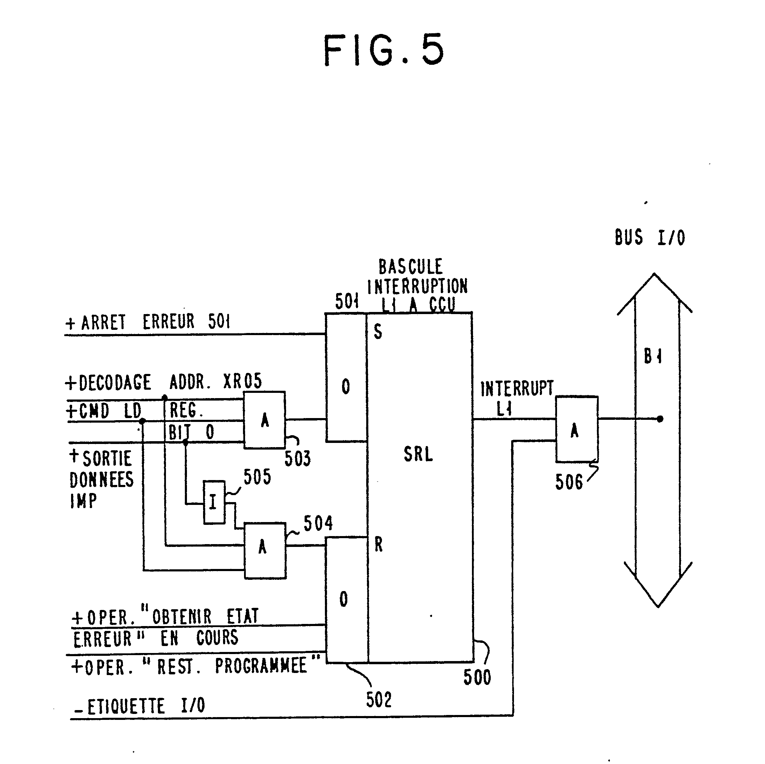

La ligne ARRET + ERREUR active provoque automatiquement une demande d'interruption de l'unité de commande centrale par un circuit qui sera décrit ultérieurement en référence à la figure 5.

L'interruption de niveau 1 : L1 est placé sur le bus I/0 de la même façon que lorsque cette interruption est demandée par le microcode (figure 5).

A la réception de cette demande d'interruption, le programme de commande dans l'unité de commande centrale, après avoir déterminé quel adaptateur avait demandé l'interruption initie une opération de lecture PIO « OBTENIR ETAT ERREUR » de la même façon que si l'interruption avait été demandée par le microcode.

Le déroulement de cette opération est le suivant. Au temps où l'étiquette TA est active, l'information envoyée par l'unité CCU sur le bus 10-8 est la suivante :

(Voir Tableau p. 10)

```
              Multiplet 0              Multiplet 1
         0  1  2  3  4  5  6  7  0  1  2  3  4  5  6  7
        ┌──────────────────────────┬──────────────┬─────┐
        !  !     !  ! !     !       !  0  0  0  1  !     ! 1 !
        !  !     !  ! !     !       !              !     !   !
        !  !     !  ! !     !       !              !     !   !
        └──────────────────────────┴──────────────┴─────┘
              ↓       ↑              Code Opér.         ↓
                                     OBTENIR ETAT       PIO
                    ↓                ERREUR             Lecture
                 Adresse
                 Adaptateur
```

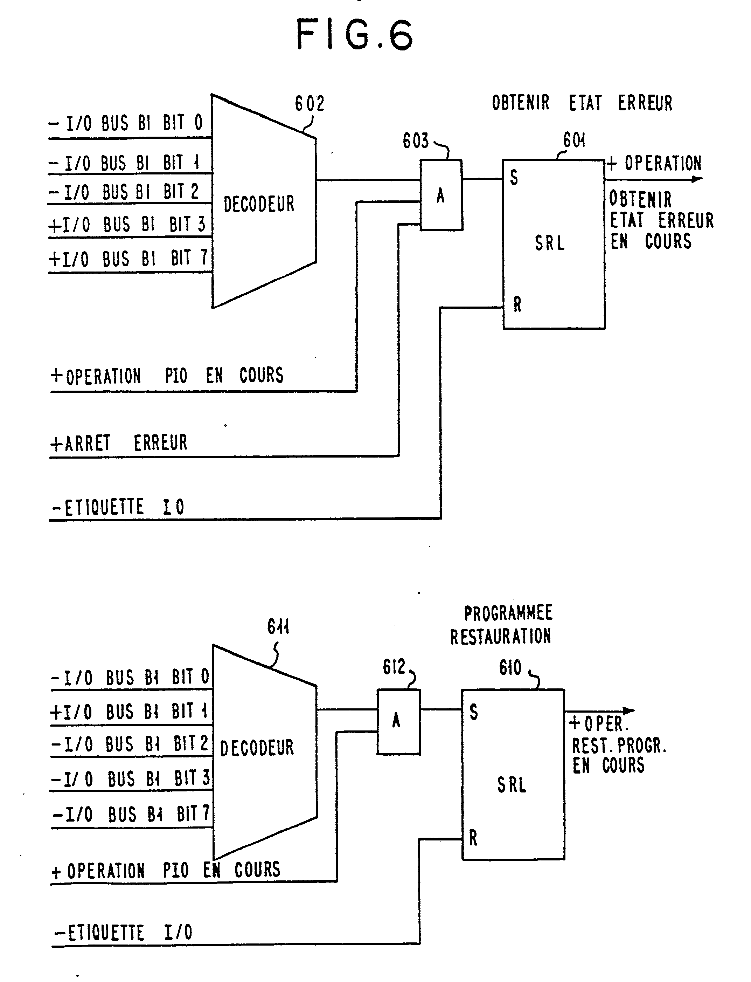

La logique d'interface 220, reconnaît l'adresse de l'adaptateur, et puisque la ligne + ARRET ERREUR est active, enclenche la bascule de décodage « OBTENIR ETAT ERREUR » (figure 6). Cette condition restauré la bascule Interruption L1 à CCU (figure 5).

L'interface 220 envoie l'étique VH à l'unité centrale CCU et attend l'étiquette TD.

Au temps où l'étiquette TD est active :

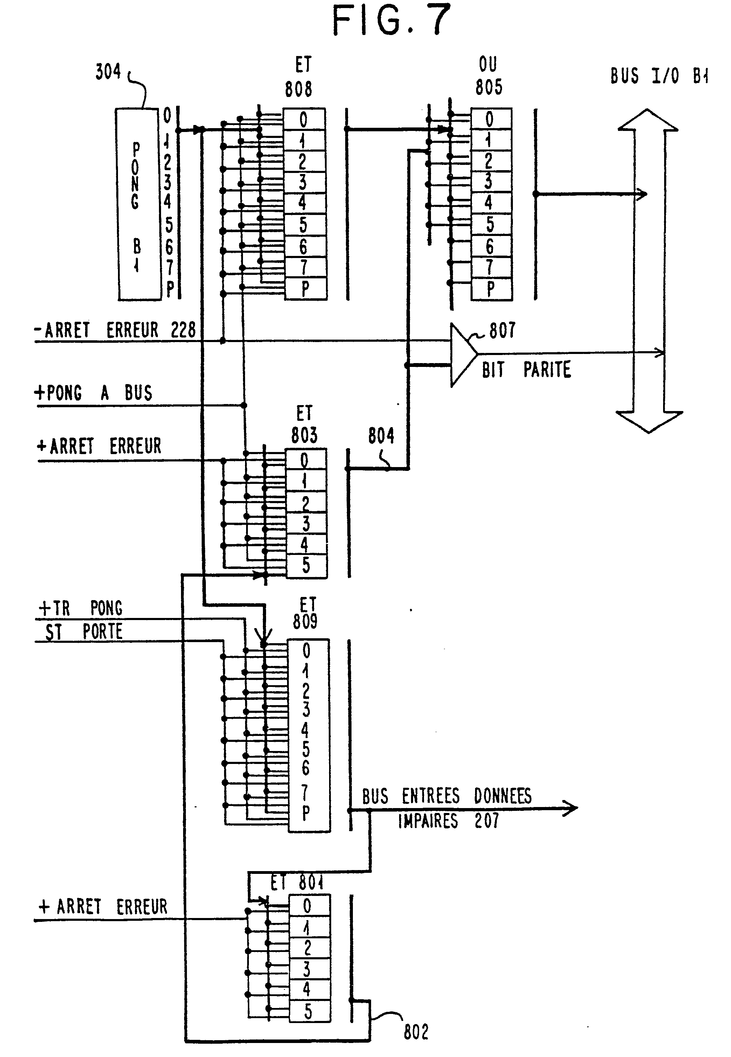

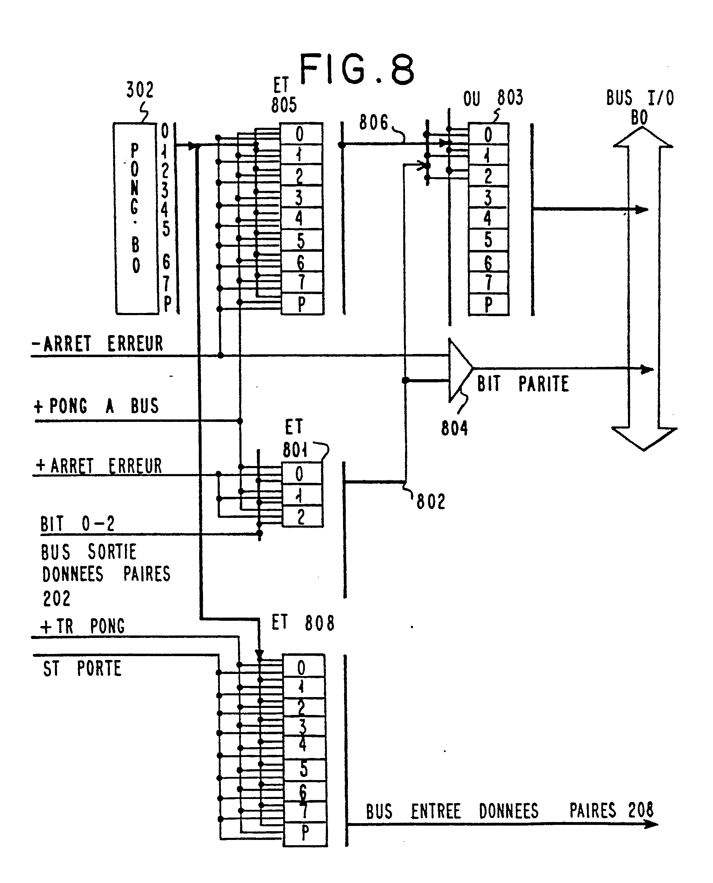

le contenu du bus ENTREE DONNEES IMPAIRES sur lequel les bits du registre d'erreur XR03 avaient été placés, et

le contenu du bus SORTIE DONNEES PAIRES sur lequel les bits du registre d'erreur 420 avaient été placés, sont transférés par l'intermédiaire des circuits de l'interface 220 décrits sur les figures 7 et 8 de l'interface 220, par le but I/O à l'unité de traitement centrale.

Ces bits sont placés sur le bus IO-8 avec le format suivant :

```
              Multiplet 0              Multiplet 1
         0  1  2  3  4  5  6  7  0  1  2  3  4  5  6  7
        ┌──────────────────────┬──────────────────────┐
        !  0  0  0  0  0 !      !                ! 0  0 !
        !                !      !                !      !
        !                !      !                !      !
        └────────────────┴──────┴────────────────┴──────┘
             .          ↑  ↑  ↑                 ↑
        .erreur données  !  !  !  !_____!
         mémoire         !  !  !       ↓
         commande 13------→!  !  !   bits 0 à 5 du
        .erreur données   !  !      registre XR 03
         registre externe !  !
         registre mémoire !  !
         locale ----------------→! !
        .erreur interne ----------→
```

Le transfert du registre PONG sur le bus de données IO-8 qui se produit normalement au temps de l'étiquette TD dans une opération normale PIO est inhibée par la condition ARRET ERREUR.

L'interface 220 envoie alors l'étiquette VH à l'unité de commande centrale et l'opération PIO se termine normalement.

La condition Arrêt suite à erreur est restaurée de la façon suivante :

A la fin de l'opération, le programme de commande de l'unité de commande centrale peut déterminer que l'adaptateur est en mode d'arrêt suite à erreur, du fait que l'un des bits 0 à 5 du multiplet de données B1 est actif.

Pour remettre en marche l'adaptateur le programme de commande envoie une commande « Restauration programmée ».

Cette commande est envoyée par une opération d'écriture de type PIO avec le format suivant sur le bus I/O 8 :

```
              Multiplet 0              Multiplet 1
         0  1  2  3  4  5  6  7  0  1  2  3  4  5  6  7
        ┌──────────────────────────┬──────────────┬─────┐
        !  !     !  ! !     !       ! 0  1  0  0 !  !  0  !
        !  !     !  ! !     !       !            !  !     !
        !  !     !  ! !     !       !            !  !     !
        └──────────────────────────┴────────────┴──┴─────┘
             ↓         ↓            Code Opération    PIO
                                    Restauration      Ecriture
                 Adresse            Programme
                 Adaptateur
```

La logique 220 reconnaît l'adresse de l'adaptateur et décode le code opération et enclenche une bascule de décodage de restauration programmée (figure 6).

Le décodage du code opération « restauration programmée » est toujours actif puisque la commande « restauration programmée » peut être envoyée par le programme de commande de l'unité centrale même si l'adaptateur n'est pas en mode arrêt suite à erreur.

La logique 220 envoie l'étiquette VH à l'unité de commande centrale et attend l'étiquette TD.

Au temps de l'étiquette TD, l'unité de commande centrale place le demi-mot de données (multiplet B0, B1) sur le bus IO-8. Ce demi-mot de données peut avoir n'importe quelle configuration, puisqu'il n'est pas utilisé par l'adaptateur.

L'interface envoie l'étiquette VH et l'opération PIO se termine normalement.

La bascule de décodage de restauration programmée, enclenchée au début de l'opération PIO reste active jusqu'à ce que l'opération soit terminée, elle est restaurée par l'étiquette 10 inactive (figure 6).

La bascule de décodage de restauration programmé étant active, elle :

déclenche c'est-à-dire met à 1, la bascule dans la position 3 du registre XR 04 fournissant le signal DES ARR ERR,

active la ligne de restauration du microprocesseur 444.

A l'exception des bits du registre d'erreur du microprocesseur, tous les autres registres (registres externes, registres de la mémoire locale) données de la mémoire de commande ne sont pas modifiés par la commande de restauration programmée.

Lorsque la bascule de décodage de restauration programmée devient inactive, à la fin de l'opération PIO correspondante :

Le bit 1 du registre XR 04 reste à 1
(Restauration programmée)

Le bit 3 de ce même registre reste à 1
(DES ARR ERR)

ce qui supprime la condition d'ARRET D'ERREUR par l'intermédiaire du circuit ET 408.

La ligne restauration du microprocesseur devient inactive, en conséquence le microprocesseur 12 reprend le traitement au niveau d'interruption 0, et à l'adresse 0 comme après une restauration générale.

Ensuite, le microcode de commande du microprocesseur reprend le contrôle de l'adaptateur.

L'instruction à l'adresse 0 niveau 0 est une instruction « Branchement sur bit » BOB qui teste si la bascule dans la position du bit 0 du registre XR 04 qui correspond à l'indication d'état « Restauration générale » est active.

Dans le cas présent cette bascule est inactive, une seconde instruction BOB est exécutée pour tester si la bascule dans la position du bit 1 du registre XR 04 (restauration programmée) est active.

Comme cette bascule est active, la troisième instruction provoque le transfert du registre XR 03 dans un registre de la mémoire locale.

La quatrième instruction remet à 0 le registre XR 03.

La cinquième instruction restaure la bascule dans la position du bit 3 du registre XR 04, si bien que le signal DES ARR ERR est à 1 afin de permettre au mécanisme de report d'erreur de fonctionner de nouveau si une erreur se produit.

Le microprocesseur transfère tous les registres externes dans la mémoire locale et finalement transfère les registres de la mémoire locale à la mémoire de commande.

Le microprocesseur entre dans un état d'attente, boucles au niveau zéro en attente d'une commande TRANSCRIPTION (dump) envoyée par l'unité de commande par une opération PIO écriture.

A réception de cette commande, le microprocesseur transfère le contenu de sa mémoire de commande sur le bus IO-8 à l'unité de commande centrale.

Dans le cas de conditions d'erreurs traitées par microcode, c'est-à-dire erreurs indiquées par les bits 6 et 7 du registre XR 03, la procédure de signalisation d'erreurs est la suivante :

Ce type d'erreur n'affecte par l'intégrité du microcode. Le microcode comporte des procédures de récupération après erreur pour reporter ce type d'erreur à l'unité de commande centrale.

Lorsqu'une de ces erreurs est détectée par le détecteur 400, elle est stockée dans le bit 6 ou 7 du registre XR 03. Le circuit OU 402 qui reçoit les deux bits génère sur sa sortie un signal de demande d'interruption au niveau 0. IRPT NIV 0 qui est envoyé à la logique 217.

Cette demande est présentée au microprocesseur.

Lorsque le traitement des instructions du microcode au niveau 0 commence les opérations suivantes se déroulent :

Le registre XR 03 est lu (opération de lecture de registre externe).

Une demande d'interruption au niveau 1 est faite à l'unité de commande centrale en mettant à 1 le bit 0 du registre d'interruption XR 05.

La demande d'interruption est placée sur le bus IO-8, par la logique d'interface 220 (figure 5).

Le registre XR 03 est vidé (opération d'écriture de registre externe).

La demande d'interruption de niveau 0 dans la logique 217 est supprimée.

Le microcode revient au niveau d'interruption où il se trouvait avant que l'erreur se produise. Les procédures de récupération après erreur se déroulent et le traitement normal reprend.

L'unité de commande centrale répond à la demande d'interruption de niveau 1. Après avoir déterminé quel adaptateur a présenté l'interruption L1, l'unité de commande centrale envoie une opération de lecture PIO « OBTENIR ETAT ERREUR ».

Au temps de l'étiquette TA, l'information envoyée sur le bus IO-8 est la suivante :

```
         0   1   2   3   4   5   6   7   0   1   2   3   4   5   6   7

       ! ┌─!─!─────!─!──────!────────────────────!──┐─!─┐
       ! !  !  !     !  !      !  0   0   0   1       ! 1 !
       ! !__!__!_____!__!_____!_____!__!_!
                                                          ↓
               ↓           ↓           ↓              PIO
                                   Code Opération     Ecriture
             _____
                  ↓
              Adresse
              Adaptateur
```

Au temps de l'étiquette TD, l'information envoyée par l'adaptateur sur le bus IO-8 est la suivante :

```
         0   1   2   3   4   5   6   7   0   1   2   3   4   5   6   7

       ! ┌────────────────────────!──────────────────!──┐──!─┐
       ! !                         ! 0   0   0   0   0   0 !     !
       ! !_____!_____!__!___!
                                                        ↓
                                                   Bits 6 et 7
                                                   XR 03
```

L'interface 220 reconnaît au temps de l'étiquette TA, l'adresse de l'adaptateur, fait une demande d'interruption au niveau 1 au microprocesseur, et emmagasine le contenu du BUS IO-8 dans le registre PING.

Lorsque le microcode commence à se dérouler au niveau 1, il lit le registre PING reconnaît l'opération OBTENIR ETAT ERREUR et charge les bits d'erreurs (bits 6 et 7 de XR 03) dans le registre PONG.

Le contenu de ce registre est, placé sur le bus IO-8 au temps de l'étiquette TD pour être transféré à l'unité de commande centrale.

Le microcode restaure la demande d'interruption L1 à l'unité de commande centrale en restaurant par une opération d'écriture de registre externe, le bit 0 du registre XR 05, et reprend le traitement normal (figure 5).

La description a été faite en supposant que les adaptateurs étaient sous contrôle de l'unité de commande centrale lorsque les conditions d'erreurs se sont produites. Il est bien évident que lorsque les adaptateurs se trouvent sous contrôle du système de maintenance, le même processus se produit mais les commandes sont envoyées par le système de maintenance qui se substitue à l'unité de commande centrale et les informations d'erreurs sur le bus I/O sont envoyées à ce système.

On va maintenant faire la description des circuits de l'interface 220 adaptés pour la mise en œuvre de l'invention.

Sur la figure 5 est représentée la bascule d'interruption L1 à CCU, SRL 500 située dans le circuit d'interface 220. Elle peut être déclenchée par un signal sur son entrée S et restaurée par un signal sur son entrée R.

Cette bascule est enclenchée lorsque la condition d'arrêt suite à erreur est détectée, c'est-à-dire lorsque le signal + ARRET ERREUR qui est appliqué à la porte OU 501 est à 1.

Les conditions de restauration de la bascule sont appliquées par la porte OU 502. Dans le mode d'arrêt suite à erreur une des conditions de restauration est l'indication d'opération « OBTENIR ETAT ERREUR » en cours fournie par la bascule de décodage OBTENIR ETAT ERREUR (figure 6). Cette bascule 500 peut aussi être restaurée par l'indication opération RESTAURATION PROGRAMMEE en cours.

Dans le mode de fonctionnement normal cette bascule 500 est enclenchée lorsque l'adaptateur fait une demande d'interruption de niveau 1 à l'unité de commande centrale.

Cette condition est indiquée par le bit 0 du registre XR 05, dont le contenu est envoyé sur le bus SORTIE DONNEES IMPAIRES.

La bascule est donc enclenchée lorsque les conditions suivantes sont présentes : DECODAGE ADRESSE XR 05, CMD LD REG, SORTIE DONNEES IMPAIRES BIT 0 à 1, conditions qui sont appliquées à la porte ET 503 dont la sortie fournie une condition d'enclenchement à la bascule 500 par la porte OU 501.

La bascule est restaurée lorsque les conditions suivantes sont présentes : DECODAGE ADRESSE XR

12

05, CMD LD REG, SORTIE DONNEES IMPAIRES BIT 0 à 0 par l'intermédiaire d'une porte ET 504, qui reçoit en entrée les deux premières conditions et le bit 1 du bus SORTIE DONNEES IMPAIRES inversée par l'inverseur 505.

La demande d'interruption L1 à la sortie de la bascule est placée sur le bus I/O par la porte ET 506 lorsque l'étiquette I/O est désactivée, c'est-à-dire au moment où une opération d'entrée/sortie est terminée et que des adaptateurs peuvent de nouveau poster les interruptions sur le bus.

Sur la figure 6 sont représentées les bascules de décodage « OBTENIR ETAT ERREUR » 601 et « RESTAURATION PROGRAMMEE » 610 situées dans l'interface 220.

Un décodeur 602 reçoit les bits du multiplet 1, B1 du bus I/O indiquant le code opération et le type d'opération et reconnaît le code opération OBTENIR ETAT ERREUR.

Une porte ET 603, a une de ses trois entrées connectée à la sortie du décodeur 602. Les deux autres entrées reçoivent l'indication d'opération PIO en cours et le signal ARRET ERREUR.

La sortie de la porte 603 est appliquée à l'entrée d'enclenchement S de la bascule 601 qui fournit en sortie l'indication d'opération « OBTENIR ETAT ERREUR » en cours. La bascule est restaurée à la fin de l'opération PIO lorsque l'étiquette I/O devient inactive.

Le décodeur 611 reçoit les bits du multiplet 1 B1 du bus I/O indiquant le code opération et le type d'opération et reconnaît le code opération « RESTAURATION PROGRAMMEE ».

Une porte ET 612 a une première entrée connectée à la sortie du décodeur 611 et une seconde entrée qui reçoit l'indication d'opération PIO en cours. La sortie de la porte ET 612 est connectée à l'entrée d'enclenchement S de la bascule de RESTAURATION PROGRAMMEE 610. Cette bascule est restaurée lorsque l'étiquette I/O devient inactive.

La figure 7 représente les circuits de l'interface 220 qui permettent de transférer le contenu du BUS ENTREE DONNEES IMPAIRES sur le bus I/O dans le cas où le microprocesseur est en panne. Normalement, les échanges de données entre les bus d'entrée et de sortie du microprocesseur se font par l'intermédiaire des registres PING et PONG comme décrit en référence à la figure 3.

Dans le cas où la condition d'arrêt suite à erreur se produit le contenu du registre XR 03 est placé sur le bus ENTREE DONNEES IMPAIRES 207 comme décrit en référence à la figure 4.

Les bits 0 à 5 de ce bus sont appliqués entre entrées d'une série de portes ET 801. Chacune des portes de la série reçoit sur une de ces entrées un des bits 0 à 5. L'autre entrée reçoit le signal + ARRET ERREUR de la sortie du circuit ET 406 (figure 4).

En conséquence dans le cas où ce signal est à 1 c'est-à-dire lorsque la condition d'arrêt suite à erreur a été détectée par le circuit 224, les bits 0 à 5 du registre XR 03 sont transférés sur le bus de sortie 802 de la série de porte 801.

Une autre série de six portes ET 803 permet de transférer sur le bus de sortie 804 les bits 0 à 5 du registre XR 03. Chaque porte ET reçoit un des bits du bus 802 sur une première entrée. Une seconde entrée reçoit le signal + ARRET ERREUR et une troisième entrée reçoit le signal PONG à BUS généré par la logique de commande de l'interface. En conséquence, les bits 0 à 5 sont transférés sur le bus de sortie 804 lorsque le signal PING à BUS est actif et que la condition d'arrêt suite à erreur a été détectée sans passer par le registre PONG.

Les bits 0 à 5 du bus 804 sont placés sur le bus I/O, multiplet B1 par une série de circuits OU 805. Le bit de parité correspondant à ces six bits est généré par un circuit de génération de parité 807 qui est inhibé lorsque la condition d'arrêt suite à erreur n'existe plus.

Dans le mode de fonctionnement normal, le contenu du registre PONG B1 304 peut être placé sur le bus I/O multiplet B1 par l'ensemble de portes ET 808. Chacune des portes reçoit un bit du registre PONG 1, le signal - ARRET ERREUR, et le signal PONG à BUS. En conséquence, en l'absence de la condition d'arrêt suite à erreur, le signal - ARRET ERREUR est à 1 et le contenu du registre PONG B1 est transféré au bus I/O par les portes ET 808 et les portes OU 805.

Le contenu du registre PONG B1 304 est placé sur le bus d'ENTREE DONNEES IMPAIRES 207 par l'ensemble de portes ET 309. Chacune des portes de l'ensemble reçoit un bit du registre PONG B1, le signal TR PONG et le signal ST porte pour fournir sur le bus 207 le contenu du registre PONG.

La figure 8 représente les circuits de l'interface 220 permettant de transférer sur le bus I/O le contenu du bus de SORTIE DONNEES PAIRES sur lequel les bits du registre d'erreur sont placés dans le cas où la condition d'arrêt suite à erreur se produit.

Chacun des bits 0 à 2 du bus de SORTIE DONNES PAIRES 202 est appliqué à une entrée des portes ET de l'ensemble des quatre portes 801 qui permet le transfert de ces bits sur le bus de sortie 802 lorsque le signal + ARRET ERREUR est à 1 (condition d'arrêt suite à erreur) et le signal + PONG à BUS est actif.

Les bits 0 à 3 du bus 802 sont appliqués à trois portes de l'ensemble de portes OU 803 pour être transférés sur le bus I/O multiplet B0. La parité de ces quatre bits est calculée par le circuit de génération de parité 804 qui est inhibé en l'abscence de la condition d'arrêt suite à erreur.

Dans le mode de fonctionnement normal, le contenu du registre PONG B0 302 est transféré au bus I/O : multiplet B0 par l'ensemble de huit portes ET 805 et l'ensemble de circuits OU 803. Chaque porte ET de l'ensemble 805 reçoit un des bits du registre PONG B0, le signal - ARRET ERREUR qui est à 1 en l'absence d'erreur, et le signal PONG à BUS. Chaque porte OU de l'ensemble 803 reçoit un des bits du bus de sortie 806 de l'ensemble de portes ET 805 pour transférer ces bits sur le bus I/O multiplet B0.

Le contenu du registre PONG B0 est transféré sur le bus d'ENTREE DONNEES PAIRES 208 par

13

# 0 102 434

l'ensemble de portes ET 808. Chaque porte reçoit un des bits du registre PONG B0 et les signaux de commande TR PONG et ST PONG pour faire passer le contenu du registre PONG B0 sur le bus 208.

## Revendications

1. Dispositif pour signaler à l'unité de commande centrale d'un équipement de traitement de données gérant des adaptateurs, les erreurs se produisant dans les adaptateurs (10), lesdits adaptateurs étant du type comportant des moyens de stockage (XR 03) des conditions d'erreurs détectées par les circuits de détection, un microprocesseur (12) ayant un registre interne d'erreur (420) et fonctionnant sous contrôle d'un microcode de commande ainsi que des circuits de détection d'erreurs (400, 226), caractérisé en ce qu'il comprend dans chaque adaptateur :
des moyens de classification (402 et 404) des conditions d'erreurs qui reçoivent les conditions d'erreurs des moyens de stockage et fournissent deux indications : la première indiquant qu'au moins une condition d'erreur affectant l'intégrité du microcode de commande s'est produite et la seconde indiquant qu'au moins une condition erreur n'affectant pas l'intégrité du microcode s'est produite,
des moyens de génération (406, 408) d'un signal d'arrêt suite à erreur (ARRET ERREUR) sensible à la première indication pour commander l'arrêt du fonctionnement du microprocesseur,
des premiers moyens de transfert (422, figure 7) pour envoyer à l'unité de commande centrale les conditions d'erreurs lorsque le signal d'arrêt suite à erreur est actif,
des seconds moyens de transfert (figure 8) pour envoyer à l'unité de commande centrale le contenu du registre interne d'erreur (420) lorsque le signal d'arrêt suite à erreur est actif.

2. Dispositif selon la revendication 1 caractérisé en ce qu'il comprend :
des moyens (217) pour interrompre le microprocesseur au niveau le plus prioritaire lorsque les moyens de classification fournissent la seconde indication, et envoyer à l'unité de commande centrale sous contrôle du microprocesseur les conditions d'erreurs n'affectant plus l'intégrité du microcode.

3. Dispositif selon la revendication 1 ou 2 utilisable dans un équipement de traitement de données dans lequel les adaptateurs sont connectés à l'unité de commande centrale par un bus, chaque adaptateur comportant pour sa liaison au bus une interface (220), la communication entre l'unité de commande et les adaptateurs se faisant par des opérations d'entrée/sortie d'écriture et de lecture, caractérisé en ce qu'il comprend :
des moyens (figure 5) qui envoient automatiquement à l'unité de commande centrale, une demande d'interruption lorsque le signal d'arrêt suite à erreur est actif.

4. Dispositif selon la revendication 3 caractérisé en ce que :
l'unité de commande centrale à la réception de la demande d'interruption initie une opération d'entrée/sortie de lecture pour obtenir l'état des conditions d'erreurs.

5. Dispositif selon la revendication 3 ou 4 caractérisé en ce que les premiers moyens de transfert comprennent :
un premier circuit logique (422, 424) qui reçoit le contenu du moyen de stockage et le transfert sur un bus d'entrée (207) au microprocesseur lorsque le signal d'arrêt suite à erreur est actif et
un second circuit logique (801, 803, 805) qui reçoit le contenu dudit bus d'entrée au microprocesseur et le place sur le bus d'entrée/sortie pour l'envoyer à l'unité de commande quand l'interface a reconnu que l'unité centrale a initié une opération d'entrée/sortie de lecture pour obtenir l'état des conditions d'erreurs.

6. Dispositif selon la revendication 5 caractérisé en ce que les seconds moyens de transfert comprennent :
des moyens (412, 416, 418) pour placer le contenu du registre interne d'erreur du microprocesseur sur un bus de sortie dudit microprocesseur, lorsque le fonctionnement du microprocesseur est arrêté par le signal arrêt suite à erreur actif,
un circuit logique (801, 803) pour transférer le contenu dudit bus de sortie quand l'interface a reconnu que l'unité centrale a initié une opération d'entrée/sortie de lecture pour obtenir l'état des conditions d'erreurs.

7. Dispositif selon la revendication 4, 5 ou 6 caractérisé en ce que l'unité de commande centrale lorsqu'elle a reçu les conditions d'erreurs initie une opération d'entrée/sortie d'écriture de restauration programmée pour restaurer l'adaptateur sous contrôle du programme.

8. Dispositif selon la revendication 7 caractérisé en ce qu'il comprend :
des moyens (444, figure 6) pour remettre le microprocesseur en fonctionnement, en réponse à la détection de l'envoi de l'opération d'entrée/sortie d'écriture de restauration programmée,
des moyens (XR 04, 408) pour désactiver le signal d'arrêt suite à erreur lorsque l'opération d'entrée/sortie d'écriture de restauration programmée est terminée,
des moyens (440) pour restaurer les moyens de stockage lorsque l'unité de commande centrale a reçu les conditions d'erreurs.

## Claims

1. In a data-processing equipment managing a plurality of adapters, a device for reporting error

14

conditions occurring in the adapters (10) to the central control unit of said equipment, said adapters being of the type comprising storage means (XR 03) for storing error conditions detected by error detection circuitry, a microprocessor (12) having an internal error register (420) and operating under the control of a control microcode and error detection circuits (400, 226), said device being characterized in that it comprises, in each adapter :

error condition classification means (402 and 404) for receiving said error conditions from said storage means and for supplying two indications the first of which indicates that at least one error condition affecting the integrity of the control microcode has occurred and the second of which indicates that at least one error condition not affecting the integrity of the microcode has occurred,

signal generating means (406, 408) for generating an interruption signal (HARD STOP signal) responsive to said first error condition indication to terminate operation of the microprocessor,

first transfer means (422, Fig. 7) for supplying the central control unit with the error conditions when the hard stop signal is active, and

second transfer means (Fig. 8) for supplying the central control unit with the contents of said internal error register (420) when said hard stop signal is active.

2. A device according to claim 1, characterized in that it includes :

means (217) for interrupting operation of the microprocessor at the highest priority level when said classification means provides said second error condition indication, and for providing the central control unit, under microprocessor control, with those error conditions which no longer affect the integrity of the microcode.

3. A device according to claim 1 or 2 adapted for use in data-processing equipment wherein the adapters are connected to the central control unit by means of a bus, each adapter including an interface (220) with said bus, communications between the control unit and the adapters being effected through input/output read and write operations, characterized in that it includes :

means (Fig. 5) for automatically sending interruption requests to the central control unit when the hard stop signal is active.

4. A device according to claim 3, characterized in that :

upon receiving an interrupt request, the central control unit initiates a read operation in order to determine the status of the error conditions.

5. A device according to claim 3 or 4, characterized in that said first transfer means includes :

a first logic circuit (422, 424) that receives the contents of said storage means and transfers same to the microprocessor via an input bus (207) when the hard stop signal is active, and

a second logic circuit (801, 803, 805) that receives the contents of said microprocessor input bus and places same onto the input/output bus for transfer to the control unit when the interface recognizes that a read input/output operation has been initiated by the central unit in order to determine the status of the error conditions.

6. A device according to claim 5, characterized in that said second transfer means includes :

means (412, 416, 418) for placing the contents of the microprocessor internal error register onto an output bus of said microprocessor when operation thereof is inhibited due to the hard stop signal being active, and

a logic circuit (801, 803) for transferring the contents of said output bus when the interface has recognized that a read input/output operation has been initiated by the central unit to determine the status of the error conditions.

7. A device according to claim 4, 5 or 6, characterized in that, upon receiving the error conditions, the central control unit initiates a programmed reset write input/output operation to reset the adapter under program control.

8. A device according to claim 7, characterized in that it includes :

means (44, Fig. 6) for restarting the microprocessor upon detecting that an input/output operation has been initiated,

means (XR04, 408) for disabling the hard stop signal upon completion of the programmed reset write input/output operation, and

means (440) for restoring the storage means when the central control unit has received the error conditions.

**Patentansprüche**

1. Vorrichtung um der zentralen Steuereinheit einer Datenverarbeitungsanlage, die Adapter steuert und überwacht, Fehler zu melden, die in den Adaptern (10) auftreten, wobei es sich bei den genannten Adaptern um einen Typ handelt, der Speichermittel (XR03) für die von den Detektionsschaltungen erkannten Fehlerbedingungen sowie einen Mikroprozessor (12) mit einem internen Fehlerregister (420) beinhaltet und der unter der Kontrolle eines Steuer-Microcodes und verschiedener Schaltkreise zur Fehlererkennung (400, 226) betrieben wird, dadurch gekennzeichnet, dass jeder Adapter folgendes umfasst :

Klassifikationsmittel (402 und 404) für die Fehlerbedingungen, die von den Speichermitteln die Fehlerbedingungen erhalten und zwei Angaben herausgeben, wobei die erste Angabe anzeigt, dass zumindest eine, die Integrität des Steuer-Microcodes beeinflussende Fehlerbedingung aufgetreten ist und die zweite, dass zumindest eine, die Integrität des Steuer-Microcodes nicht beeinflussende Fehlerbedingung aufgetreten ist ;

Generierungsmittel (406, 408) für ein Stop-Signal, das einem Fehler folgt (FEHLER-STOP) und auf die erste Anzeige anspricht, um den Betrieb des Mikroprozessors zu unterbrechen ;

erste Transfermittel (422, Abbildung 7), um der zentralen Steuereinheit die Fehlerbedingungen zu übertragen, wenn das einem Fehler folgende Stop-Signal aktiv ist ;

zweite Transfermittel (Abbildung 8), um der zentralen Steuereinheit den Inhalt des internen Fehlerregisters (420) zu übertragen, wenn das einem Fehler folgende Stop-Signal aktiv ist.

2. Vorrichtung nach Anspruch 1, dadurch gekennzeichnet, dass sie umfasst :

Mittel (217), um den Mikroprozessor auf der höchstmöglichen Prioritätsebene zu unterbrechen, wenn die Klassifikationsmittel die zweite Angabe erstellen und um der zentralen Steuereinheit unter Kontrolle des Mikroprozessors die Fehlerbedingungen zu übermitteln, die die Integrität des Microcodes nicht mehr beeinflussen.

3. Vorrichtung nach Anspruch 1 oder 2, die in einer Datenverarbeitungsanlage benutzt werden kann, in der Adapter über einen Datenbus an der zentralen Steuereinheit angeschlossen sind, wobei jeder Adapter für seinen Verkehr mit dem Datenbus eine Schnittstelle (220) umfasst und der Verkehr zwischen der Steuereinheit und den Adaptern über Ein-Ausgabe-Schreib-Leseoperationen abgewickelt wird, dadurch gekennzeichnet, dass sie umfasst :

Mitteln (Abbildung 5), die automatisch eine Unterbrechungsforderung an die zentrale Steuereinheit richten, wenn das einem Fehler folgende Stop-Signal aktiv ist.

4. Vorrichtung nach Anspruch 3, dadurch gekennzeichnet, dass die zentrale Steuereinheit nach Empfang der Unterbrechungsforderung eine Ein-Ausgabe-Leseoperation initialisiert, um den Status der Fehlerbedingungen zu erhalten.

5. Vorrichtung nach Anspruch 3 oder 4, dadurch gekennzeichnet, dass die ersten Transfermittel folgendes umfassen :

eine erste logische Schaltung (422, 424), die den Inhalt des Speichermittels empfängt und diesen über einen Eingabe-Bus (207) den Mikroprozessor übermittelt, wenn das einem Fehler folgende Stop-Signal aktiv ist und

eine zweite logische Schaltung (801, 803, 805), die den Inhalt vom genannten Eingabe-Bus zum Mikroprozessor erhält und ihn auf den Ein-Ausgabe-Bus leitet, um ihn der Steuereinheit zu übertragen, wenn die Schnittstelle erkannt hat, dass die zentrale Steuereinheit eine Ein-Ausgabe-Leseoperation initialisiert hat mit dem Ziel, den Status der Fehlerbedingungen zu erhalten.

6. Vorrichtung nach Anspruch 5, dadurch gekennzeichnet, dass die zweiten Transfermittel folgendes umfassen :

Mittel (412, 416, 418), um den Inhalt des internen Fehlerregisters des Mikroprozessors einem Ausgabe-Bus des genannten Mikroprozessors zu übertragen, wenn der Betrieb dieses Mikroprozessors durch ein aktives, einem Fehler folgendes Stop-Signal unterbrochen wurde,

eine logische Schaltung (801, 803) um den Inhalt des genannten Ausgabe-Busses zu übertragen, wenn die Schnittstelle erkannt hat, dass die zentrale Steuereinheit eine Ein-Ausgabe-Leseoperation initialisiert hat mit dem Ziel, den Status der Fehlerbedingungen zu erhalten.

7. Vorrichtung nach Anspruch 4, 5 oder 6, dadurch gekennzeichnet, dass die zentrale Steuereinheit, wenn sie die Fehlerbedingungen erhalten hat, eine Ein-Ausgabe-Schreiboperation programmierter Rückstellung initialisiert, um den Adapter unter Programmkontrolle rückzustellen.

8. Vorrichtung nach Anspruch 7, dadurch gekennzeichnet, dass sie folgendes umfasst :

Mittel (444, Abbildung 6), um den Mikroprozessor als Antwort auf die Erkennung der Übertragung der Ein-Ausgabe-Schreiboperation programmierter Rückstellung wieder in Betrieb zu setzen,

Mittel (XR04, 408), um das einem Fehler folgende Stop-Signal zu desaktivieren, wenn die Ein-Ausgabe-Schreiboperation der programmierten Rückstellung beendet ist,

Mittel (440), um die Speichermittel rückzustellen, sobald die zentrale Steuereinheit die Fehlerbedingungen empfangen hat.

16

# FIG. 1

FIG. 2

FIG. 3

FIG. 4

0 102 434

# FIG.5

+ ARRET ERREUR 501

+ DECODAGE ADDR. XR05

+ CMD LD REG. BIT 0

+ SORTIE DONNEES IMP

BASCULE INTERRUPTION L1 A CCU

501

S

0

A

503

505

I

A 504

R

0

SRL

INTERRUPT L1

A

506

500

502

BUS I/O

B1

+ OPER. "OBTENIR ETAT ERREUR" EN COURS

+ OPER. "REST. PROGRAMMEE"

_ ETIQUETTE I/O

# FIG.6

- I/O BUS BI BIT 0
- I/O BUS BI BIT 1
- I/O BUS BI BIT 2
+I/O BUS BI BIT 3
+I/O BUS BI BIT 7

DECODEUR  602

603  A

OBTENIR  ETAT  ERREUR

601  SRL

S

+ OPERATION

OBTENIR
ETAT  ERREUR
EN  COURS

R

+OPERATION  PIO  EN  COURS

+ARRET  ERREUR

-ETIQUETTE  IO

- I/O BUS BI BIT 0
+I/O BUS BI BIT 1
- I/O BUS BI BIT 2
- I/O BUS BI BIT 3
- I/O BUS BI BIT 7

DECODEUR  611

612  A

PROGRAMMEE
RESTAURATION

610  SRL

S

+OPER.
REST.PROGR.
EN  COURS

R

+ OPERATION  PIO  EN  COURS

-ETIQUETTE  I/O

6

# FIG.7

FIG.8